# EUROPÄISCHE PATENTSCHRIFT

(11) **EP 1 643 348 B1**
(45) Veröffentlichungstag und Bekanntmachung des Hinweises auf die Patenterteilung: **04.12.2019**
(21) Anmeldenummer: 05107471.4
(22) Anmeldetag: 15.08.2005
(51) Int. Cl.: G06F 1/24, G06F 1/26

(54) **Verfahren zur Verriegelung eines Aufwecksignals**
Method for blocking a wake-up signal
Procédé de blocage d'un signal de réveil

(30) Priorität: 29.09.2004 DE 102004047181
(43) Veröffentlichungstag der Anmeldung: 05.04.2006
(73) Patentinhaber: ROBERT BOSCH GMBH, 70442 Stuttgart (DE)
(72) Erfinder: Marcato, Danilo, 75172, Pforzheim (DE); Tran, Binh-Tay, 74080, Heilbronn (DE); Manca, Gaetano, 70199, Stuttgart (DE)

(56) Entgegenhaltungen:
- DE-A1- 3 718 471
- DE-A1- 3 922 506
- DE-A1- 10 157 802
- JP-A- 4 098 508
- US-A1- 2002 141 874

## Beschreibung

Die Erfindung betrifft ein Verfahren zur Verriegelung eines Aufwecksignals, eine Übertemperaturschaltung, ein Computerprogramm und ein Computerprogrammprodukt.

### Stand der Technik

Eine Funktionsweise eines Steuergeräts kann durch dessen Temperatur oder die Temperatur der Umgebung, in der sich das Steuergerät befindet, beeinflusst werden. Eine temperaturbedingte Beschädigung des Steuergeräts kann vermieden werden, wenn ein Einschalten des Steuergeräts außerhalb eines vorgesehenen Temperaturbereichs vermieden wird.

DE 10157802 A1 offenbart ein mobiles Computersystem sowie ein Verfahren zum Betreiben und eine Verwendung eines derartigen Computersystems. Der Start des Computersystems wird beispielsweise unter Berücksichtigung einer Temperatur des Computersystems verhindert, indem ein entsprechender Befehl von einer Auswerteelektronik an die Stromversorgung übermittelt wird.

DE 3718471 A1 offenbart das Übersteuern einer Blockierung einer beispielsweise wegen Übertemperatur abgeschalteten Fahrzeugkomponente durch Betätigung eines Prioritätenschalters.

Vor diesem Hintergrund wird ein Verfahren mit den Merkmalen des Patentanspruchs 1, eine Übertemperaturschaltung mit den Merkmalen des Patentanspruchs 5, ein Computerprogramm mit den Merkmalen des Patentanspruchs 8 und ein Computerprogrammprodukt mit den Merkmalen des Patentanspruchs 9 vorgestellt.

### Vorteile der Erfindung

Das erfindungsgemäße Verfahren dient einem Verriegeln eines durch ein Aufwecksignal zu weckenden Steuergeräts, das unter Berücksichtigung einer Temperatur des Steuergeräts durchgeführt wird, wobei das Aufwecksignal durch eine Übertemperaturschaltung blockiert wird und wobei ein Signalpfad, über den das Aufwecksignal zu dem Steuergerät zu übermitteln ist, blockiert wird.

Das Steuergerät kann lediglich durch das Aufwecksignal (wake up signal) geweckt werden und einen Betrieb aufnehmen, bei dem es ggf. zur Steuerung einer oder mehrerer anderer Vorrichtungen Steuerungsfunktionen ausführt, sofern die Temperatur des Steuergeräts oberhalb der kritischen Temperatur ist oder einen Wert oberhalb dieser kritischen Temperatur erreicht, wird das Aufwecksignal für das Steuergerät durch die Übertemperaturschaltung blockiert.

In Ausgestaltung kann vorgesehen sein, dass das Aufwecksignal einmalig blockiert wird. Wird das Aufwecksignal durch die Übertemperaturabschaltung und somit hardwareseitig blockiert, wird ein Aufwecken des Steuergeräts unterdrückt, so dass ein Aufwecken des Steuergeräts nicht möglich ist.

Die Übertemperaturabschaltung, die als hardwareseitige Verriegelungselektronik ausgebildet sein kann, kann durch eine geeignete Software bzw. ein geeignetes Programm gesteuert werden, wobei eine Blockierung des Aufwecksignals durch diese Software bzw. dieses Programm ausgelöst wird.

Bei Ausführung des Verfahrens kann vorgesehen sein, dass das Aufwecksignal oberhalb einer kritischen Temperatur bzw. einer Abschalttemperatur blockiert wird. Damit wird ein Wecken des Steuergeräts oberhalb dieser Temperatur unterbunden. Alternativ kann das Aufwecksignal unterhalb einer kritischen Temperatur, innerhalb eines Temperaturbereichs oder außerhalb eines Temperaturbereichs blockiert werden.

Es ist auch möglich, dass das Verfahren unter Berücksichtigung oder in Abhängigkeit einer Temperatur mindestens einer anderen Vorrichtung durchgeführt wird. Diese Vorrichtung kann sich in mittelbarer oder unmittelbarer Wechselwirkung mit dem Steuergerät befinden und durch das Steuergerät bspw. gesteuert werden. Falls die Temperatur dieser Vorrichtung oberhalb der kritischen Temperatur liegt oder diese kritische Temperatur erreichen sollte, wird das Aufwecksignal durch die Übertemperaturschaltung dauerhaft blockiert.

Das Steuergerät ist üblicherweise in einer technischen Einrichtung, wie bspw. einem Fahrzeug, untergebracht.

Das Verfahren kann bei einem durch eine Startvorrichtung, üblicherweise durch einen Zündschlüssel, eingeleiteten Start des Steuergeräts durchgeführt werden. Das Wecken des Steuergeräts, damit dieses Steuerungsfunktionen aufnimmt, kann nur dann eingeleitet werden, wenn das Aufwecksignal das Steuergerät erreichen kann und demnach nicht blockiert ist. Ist das Aufwecksignal jedoch bei einer Temperatur größer oder gleich der kritischen Temperatur durch eine Abschaltung blockiert bzw. verriegelt, kann das Steuergerät bei dem Start nicht geweckt werden. Das Steuergerät kann mit Hilfe des Zündschlüssels über einen ersten Pfad immer geweckt werden. Die Verriegelung durch die Übertemperaturschaltung betrifft hier einen zweiten Pfad, bspw. ein CAN (controller area network), der zum Wecken des Steuergeräts vorgesehen ist. Bei der Erfindung ist vorgesehen, nur einen dieser beiden Pfade dauerhaft zu blockieren.

Es kann vorgesehen sein, dass mit dem Verfahren durch die Übertemperatur eine dauerhafte Blockierung des Aufwecksignals einmalig ausgelöst wird. Hierbei wird die durch die Übertemperaturschaltung einmalig ausgelöste Verriegelung durch eine Absenkung der Temperatur, entweder der Temperatur des Steuergeräts und/oder der Vorrichtung, unter die kritische Temperatur nicht aufgehoben. Demnach wird das Aufwecksignal durch die Übertemperaturschaltung dauerhaft blockiert. Die Übertemperaturschaltung verriegelt somit dauerhaft ein Wecken des Steuergeräts durch das über den Signalpfad, bspw. ein CAN (controller area network), bereitgestellte Aufwecksignal, sobald die Übertemperaturschaltung die Blockierung bei Erreichen der kritischen Temperatur einmalig ausgelöst hat.

Die Blockierung bzw. die sog. dauerhafte Blockierung des Aufwecksignals kann bei einem durch die Startvorrichtung eingeleiteten Start des Steuergeräts zurückgesetzt werden. Dies ist bspw. dann der Fall, wenn sich die Temperatur unterhalb der kritischen Temperatur befindet. Das Aufwecksignal kann das Steuergerät dann bei dem Start wieder erreichen.

In Ausgestaltung des Verfahrens wird das Aufwecksignal durch einen Transistor in der Übertemperaturschaltung blockiert. Hierzu kann vorgesehen sein, dass der Transistor in den Signalpfad derart eingebunden ist, dass das für das Steuergerät vorgesehene Aufwecksignal durch den Transistor aus dem Signalpfad abgeleitet wird. Dies erfolgt in Abhängigkeit der Temperatur, wobei der Transistor durch einen bspw. temperaturempfindlichen Baustein beeinflusst werden kann. Der Transistor kann dabei durch ein bistabiles Element der Übertemperaturschaltung geschaltet werden. Ein Signalpfad zwischen dem Steuergerät und einem weiteren elektronischen Gerät, über den das Aufwecksignal zu übermitteln ist, wird in diesem Fall durch den Transistor blockiert, so dass das von dem weiteren Gerät gesendete Aufwecksignal das Steuergerät nicht erreicht. Die Übertemperaturschaltung kann auch innerhalb eines bzw. des Steuergeräts angeordnet sein.

Das bistabile Element zum Schalten des Transistor ändert seine Zustände in Abhängigkeit der Temperatur des Steuergeräts und/oder der Vorrichtung und kann, durch den temperaturempfindlichen Baustein beeinflusst, seinen Zustand ändern.

Die erfindungsgemäße Übertemperaturschaltung für ein Steuergerät ist dazu ausgebildet, ein Aufwecksignal, mit dem das Steuergerät zu wecken ist, auf einem Signalpfad zu verriegeln.

Die Übertemperaturschaltung kann als Verriegelungselektronik ausgebildet sein und wird bei Erreichen der kritischen Temperatur mit Hilfe einer Software betätigt, so dass mit der Übertemperaturschaltung eine durch die Software ausgelöste hardwareseitige Verriegelung des Steuergeräts realisiert ist. Die Übertemperaturschaltung kann bspw. in dem Steuergerät untergebracht sein.

Die Übertemperaturschaltung oder zumindest ein temperaturempfindlicher Baustein der Übertemperaturschaltung kann ein Temperaturprofil aufweisen, das mindestens einem maximale Temperaturprofil des Steuergeräts entspricht. Demnach kann die Übertemperaturschaltung oder der temperaturempfindliche Baustein Eigenschaften eines Temperatursensors aufweisen. Eine Temperaturkennlinie oder das Temperaturprofil der Übertemperaturschaltung oder des Bausteins ist derart auf eine Temperaturkennlinie bzw. das Temperaturprofil des Steuergeräts bzw. der Vorrichtung abgestimmt, dass die Übertemperaturschaltung auf Temperaturänderungen des Steuergeräts zuverlässig reagieren kann und das Aufwecksignal für das Steuergerät blockiert, sobald sich die Temperatur oberhalb der kritischen Temperatur befindet.

Die Übertemperaturschaltung kann ein bistabiles Element, wie bspw. ein Flipflop, und einen Transistor aufweisen, wobei das bistabile Element in Abhängigkeit eines Werts einer Temperatur, ggf. durch den temperaturempfindlichen Baustein beeinflusst, seine Zustände wechselt und somit den Transistor schaltet. Der temperaturempfindliche Baustein kann auch derart ausgebildet sein, dass er den Transistor direkt schaltet, so dass auf das bistabile Element verzichtet werden kann.

Das erfindungsgemäße Computerprogramm mit Programmcodemitteln ist dazu vorgesehen, alle Schritte des erfindungsgemäßen Verfahrens durchzuführen, wenn das Computerprogramm auf einem Computer oder einer entsprechenden Recheneinheit durchgeführt wird.

Das erfindungsgemäße Computerprogrammprodukt umfasst Programmcodemittel, die auf einem computerlesbaren Datenträger gespeichert sind, um das erfindungsgemäßge Verfahren durchzuführen, wenn das Computerprogramm auf einem Computer oder einer entsprechenden Recheneinheit durchgeführt wird.

Weitere Vorteile und Ausgestaltungen der Erfindung ergeben sich aus der Beschreibung und der beiliegenden Zeichnung. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Der Umfang der Erfindung ist durch die unten genannten Ansprüche 1 bis 9 definiert.

### Zeichnung

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt in schematischer Darstellung eine Übertemperaturschaltung, ein Steuergerät sowie ein weiteres elektronisches Gerät in schematischer Darstellung
- Figur 2: verdeutlicht in einem Ablaufdiagramm ein Verfahren zur Verriegelung eines Steuergeräts.

Die Figuren werden zusammenhängend und übergreifend beschrieben, gleiche Bezugszeichen bezeichnen gleiche Bauteile oder Verfahrensschritte.

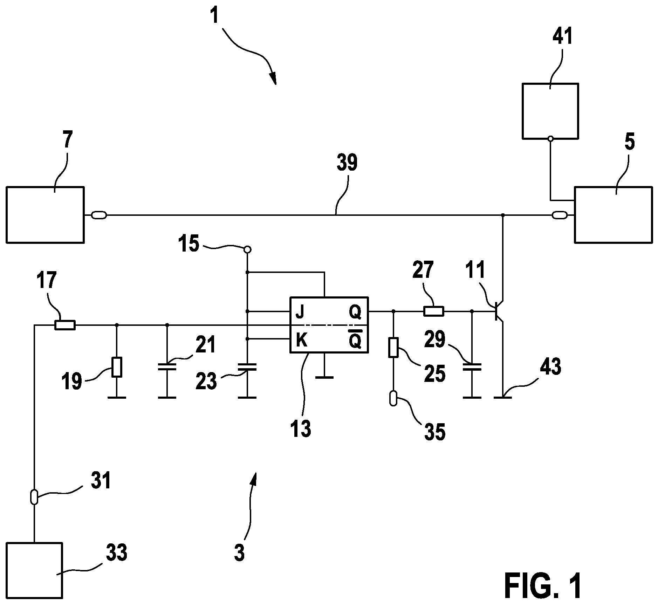

Die Figur 1 zeigt in schematischer Darstellung eine Steuergeräteeinheit 1 mit einer Übertemperaturschaltung 3, einem Steuergerät 5 und einem elektronischen Gerät 7. Die Übertemperaturschaltung 3 weist einen Transistor 11, bspw. einen T100, ein als J-K-Flipflop ausgebildetes bistabiles Element 13, eine Verbindung zu einer Spannungsquelle 15 sowie diverse Widerstände und Kondensatoren auf.

Hierbei kann es sich um einen elektrischen Widerstand 17, bspw. einen R110 mit einem Widerstandswert von 100 kΩ, einen elektrischen Widerstand 19, bspw. einen R111 mit einem Widerstandswert von 1 MΩ, einen Kondensator 21, bspw. einen C110 mit einer Kapazität von 10 nF, einen Kondensator 23, bspw. einen C101 mit einer Kapazität von 10 nF, einen elektrischen Widerstand 25, bspw. einen R101 mit einem Widerstandswert von 100 kΩ, einen elektrischen Widerstand 27, bspw. einen R100 mit einem Widerstandswert von 100 kΩ, und einen Kondensator 29, bspw. einen C100 mit einer Kapazität von 10 nF, handeln.

Die Übertemperaturschaltung 3 besitzt einen ersten Ausgang 31, über den die Übertemperaturschaltung 3 mit einem temperaturempfindlichen Baustein 33 verbunden ist. Des weiteren weist die Übertemperaturschaltung 3 einen Analog-Digital-Ausgang 35 auf.

Das Steuergerät 5 und das elektrische Gerät 7, die innerhalb der Steuergeräteeinheit 1 angeordnet sind, sind über einen Signalpfad 39 miteinander verbunden. Des weiteren ist dieses Steuergerät 5 mit einer Startvorrichtung 41, bspw. einem Zündschlüssel, verbunden. Der Transistor 11 ist derart in den Signalpfad 39 zwischen dem Steuergerät 5 und dem elektrischen Gerät 7 eingebunden, dass der Transistor 11 ein über den Signalpfad 39 zu transportierendes Signal in Abhängigkeit davon, wie er geschaltet ist, zu einer Erdung 43 ableitet und das Signal somit blockiert oder den Signalpfad 39 freigibt und damit das Signal zu dem Steuergerät 5 gelangt.

Die Startvorrichtung 41 ist dazu ausgebildet, das Steuergerät 5 zurückzusetzen oder zu starten. Ein von dem elektrischen Gerät 7 erzeugtes Aufwecksignal kann dabei über den Signalpfad 39 an das Steuergerät 5 übermittelt werden, wenn der Transistor 11 gesperrt ist. Mit dem Aufwecksignal ist es möglich, das Steuergerät 5 zu wecken.

Die Übertemperaturschaltung 3 ist dazu ausgebildet, das Aufwecksignal temperaturabhängig zu blockieren und das Steuergerät 5 somit zu verriegeln. Es ist dabei vorgesehen, dass das Aufwecksignal unter Berücksichtigung einer Temperatur des Steuergeräts 5 blockiert wird. Die Temperatur des Steuergeräts 5 wird durch den temperaturempfindlichen Baustein 33 erfasst, der ein Temperaturprofil aufweist, das mindestens einem maximalen Temperaturprofil des Steuergeräts 5 entspricht. Dies bedeutet, dass der Baustein 33 zuverlässig unterscheiden kann, ob die Temperatur des Steuergeräts 5 oberhalb oder unterhalb der kritischen Temperatur befindet oder gleich dieser kritischen Temperatur ist. Hierzu kann das Temperaturprofil des Bausteins 33 und somit auch ein Temperaturprofil der Übertemperaturschaltung 3 bspw. im Bereich der kritischen Temperatur des Steuergeräts 5 besonders empfindlich sein.

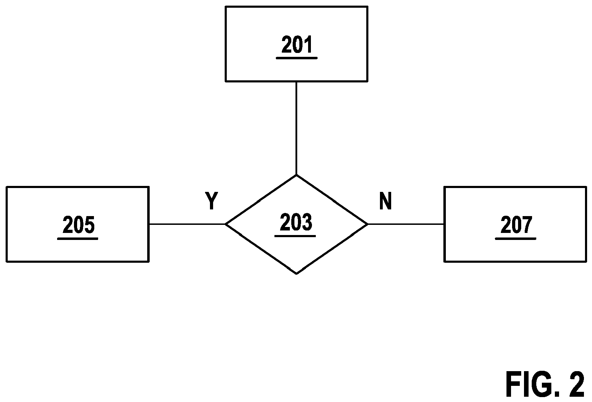

Im vorliegenden Beispiel beeinflusst der temperaturempfindliche Baustein 33 in Abhängigkeit der Temperatur des Steuergeräts 5 die beiden möglichen Stellungen des bistabilen Elements 13. Dabei sich ergebende Möglichkeiten für eine Funktion des Steuergeräts 5 sind anhand der Verfahrensschritte 201, 203, 205, 207 des in Figur 2 gezeigten Ablaufdiagramms dargestellt.

Ausgehend von einem Urstart 201 erfolgt eine softwaregesteuerte Überprüfung 203. Ein erster Zustand 205 (Q=0) des bistabilen Elements 13 tritt dann ein, wenn sich die Temperatur des Steuergeräts 5 unterhalb der kritischen Temperatur befindet. In diesem Fall wird der Transistor 11 durch das bistabile Element 13 derart geschaltet, dass der Transistor 11 einen Weg des Aufwecksignals entlang des Signalpfads 39 freigibt und das Aufwecksignal das Steuergerät 5 erreicht, so dass das Steuergerät 5 geweckt werden kann.

Einen zweiten Zustand (Q=0) 207 nimmt das bistabile Element 13 beeinflusst durch den Baustein 33 dann ein, wenn die Temperatur des Steuergeräts 5 größer oder gleich der kritischen Temperatur ist. In diesem Fall wird der Transistor 11 durch das bistabile Element 13 derart geschaltet, dass das Aufwecksignal blockiert wird. Da das Aufwecksignal das Steuergerät 5 in diesem Fall nicht erreicht, ist das Steuergerät 5 verriegelt und kann nicht über den Signalpfad 39 geweckt werden.

Bei der vorliegenden Anordnung können sich unterschiedliche Einschaltbedingungen ergeben. Bei dem Urstart 201 wird erstmalig eine Spannung U_STBY an der Spannungsquelle 15 angelegt. Dadurch kippt das bistabile Element 13 aufgrund einer Dauerversorgung durch die Spannung U_STBY in den bevorzugten Zustand (Q=0) 205. In diesem Fall ist die Temperatur des Steuergeräts 5 kleiner als die kritische Temperatur. Der Transistor 11 wird durch das bistabile Element 13 gesperrt. Dadurch ist der Signalpfad 39 freigegeben und ein Wecken des Steuergeräts 5 durch das über den Signalpfad 39 übermittelte und von dem elektronischen Gerät 7 ausgehende Aufwecksignal möglich. Der Status des Transistors 11 kann mit einer Software über den Analog-Digital-Ausgang 35 gelesen werden.

Tritt ein sog. Fehlerfall ein, ist die Temperatur des Steuergeräts 5 oberhalb der kritischen Temperatur. Somit nimmt das bistabile Element 13 beeinflusst durch den Baustein 33 den Zustand (Q=1) 207 ein. Dadurch wird der Transistor 11 derart geschaltet, dass dieser leitend ist, so dass das Aufwecksignal aus dem Signalpfad 39 hin zur Erdung 43 abgeleitet wird und somit das Aufwecksignal für das Steuergerät 5 blockiert und das Steuergerät 5 demnach verriegelt ist. Das Steuergerät 5 kann durch das Aufwecksignal nicht geweckt werden. Ein Wecken des Steuergeräts 5 ist unabhängig von einer Temperatur des Steuergeräts 5 in beiden Fällen mit der Startvorrichtung 41 möglich.

Bei einer erstmaligen Betätigung der Startvorrichtung 41 wird das Steuergerät 5 geweckt. Der Status des Transistors 11 kann dabei über den Analog-Digital-Eingang 35 abgefragt werden. Falls die Temperatur des Steuergeräts 5 kleiner als die kritische Temperatur sein sollte, nachdem sie zuvor oberhalb dieser kritischen Temperatur lag oder gleich dieser kritischen Temperatur war, kann die Software über den Eingang 31 toggeln bzw. hin- und herschalten und für das bistabile Element 13 einen gewünschten Zustand setzen.

Falls die Temperatur des Steuergeräts 5 immer noch größer oder gleich der kritischen Temperatur sein sollte, kann die Software über den Eingang 31 toggeln und das bistabile Element 13 derart setzen, dass der Transistor 11 das Aufwecksignal ableitet und das Steuergerät 5 verriegelt wird bzw. verriegelt bleibt. Dabei wird der Transistor 11 durch das bistabile Element 13 in den entsprechenden Zustand gesetzt und bleibt über die Spannungsquelle 15 mit der Spannung U_STBY versorgt. Ein Aufwecken des Steuergeräts 5 ausgehend von dem elektronischen Gerät 7 ist folglich nicht möglich.

Ist ein Aufwecken des Steuergeräts 5 vorgesehen, so muss dieses über die Startvorrichtung 41 zurückgesetzt und somit geweckt werden, allerdings erfolgt sodann stets eine Prüfung über die Software. Aufgrund der Ausgestaltung und der Funktionsweise der Übertemperaturschaltung 3 ist es demnach nicht möglich, das Steuergerät 5 zu wecken, falls die Temperatur des Steuergeräts 5 größer oder gleich der kritischen Temperatur ist.

Die gesamte Anordnung 1 kann in einem Fahrzeug angeordnet sein. Das Verriegeln des Steuergeräts 5 durch Blockieren des Aufwecksignals kann auch in Abhängigkeit einer anderen Vorrichtung, bspw. einem Getriebe des Fahrzeugs, und demnach unabhängig von der Temperatur des Steuergeräts 5 erfolgen. Als kritische Temperatur kann eine für die Funktionsweise des Getriebes maximal zulässige Temperatur von bspw. 150° C gewählt werden. Oberhalb dieser Temperatur in dem Getriebe wird daher das Wecken des Steuergeräts unterbunden. Bei einer derartigen Anwendung kann es sich bei der Startvorrichtung 41 um ein durch einen Zündschlüssel (Kl. 15) zu betätigendes Zündschloss des Fahrzeugs handeln. Das Zurücksetzen des Steuergeräts 5 ist mit einem entsprechenden Signal des Zündschlosses möglich.

Das Steuergerät 5 für ein Getriebe kann innerhalb eines CAN-Verbunds oder innerhalb der Steuergeräteeinheit 1 über einen oder mehrere Signalpfade 39 geweckt werden.

Allerdings ist ein unzulässiger Betrieb des Steuergeräts 5 nach einem initiierten Wecken außerhalb kritischer Betriebsparameter, im vorliegenden Fall oberhalb der kritischen Temperatur, nicht möglich. Die Verriegelung des Steuergeräts 5 durch Blockierung des Aufwecksignals durch die Übertemperaturschaltung 3 erfolgt hardwareseitig. Die Übertemperaturschaltung 3 kann alternativ auch innerhalb des Steuergeräts 5, das als ein Stabi-ASIC ausgebildet sein kann, untergebracht sein, so dass bei einer derartigen Ausgestaltung innerhalb des Steuergeräts 5 ein optimales Verhältnis von Siliziumfläche zu Keramikfläche erreicht werden kann. Es ist auch eine Verwendung der Übertemperaturschaltung 3 bei einem sog. LIN Wake-up denkbar.

## Patentansprüche

1. Verfahren zum Verriegeln eines durch ein Aufwecksignal zu weckenden Steuergeräts (5), das unter Berücksichtigung einer Temperatur des Steuergeräts (5) durchgeführt wird,
wobei das Aufwecksignal durch eine Übertemperaturschaltung (3) blockiert wird, indem ein Signalpfad (39), über den das Aufwecksignal zu dem Steuergerät (5) zu übermitteln ist, blockiert wird,
**dadurch gekennzeichnet, dass** eine durch die Übertemperaturschaltung (3) ausgelöste Blockierung des Aufwecksignals bei einem durch eine Startvorrichtung (41) über einen anderen Signalpfad eingeleiteten Start des Steuergeräts (5) zurückgesetzt wird, wenn sich die Temperatur unterhalb einer kritischen Temperatur befindet, so dass das Aufwecksignal das Steuergerät wieder erreichen kann.

2. Verfahren nach Anspruch 1, bei dem eine Blockierung des Aufwecksignals durch eine Software ausgelöst und das Aufwecksignal hardwareseitig blockiert wird.

3. Verfahren nach einem der voranstehenden Ansprüche, bei dem das Aufwecksignal, das für das Steuergerät (5) vorgesehen ist, durch einen Transistor (11) der Übertemperaturschaltung (3), indem der Transistor (11) das Aufwecksignal ableitet, blockiert wird.

4. Verfahren nach Anspruch 3, bei dem der zum Ableiten des Aufwecksignals vorgesehene Transistor (11) durch ein bistabiles Element (13) der Übertemperaturschaltung (3) geschaltet wird.

5. Übertemperaturschaltung für ein Steuergerät (5), **dadurch gekennzeichnet, dass** die Übertemperaturschaltung dazu ausgebildet ist, ein Aufwecksignal, mit dem das Steuergerät (5) zu wecken ist, auf einem Signalpfad (39) zu blockieren und das Steuergerät (5) somit zu verriegeln,
**dadurch gekennzeichnet, dass** eine durch die Übertemperaturschaltung (3) ausgelöste Blockierung des Aufwecksignals bei einem durch eine Startvorrichtung (41) über einen anderen Signalpfad eingeleiteten Start des Steuergeräts (5) zurückgesetzt wird, wenn sich die Temperatur unterhalb einer kritischen Temperatur befindet, so dass das Aufwecksignal das Steuergerät wieder erreichen kann.

6. Übertemperaturschaltung nach Anspruch 5, die ein Temperaturprofil aufweist, das mindestens einem maximalen Temperaturprofil des Steuergeräts (5) entspricht.

7. Übertemperaturschaltung nach Anspruch 5 oder 6, die einen Transistor (11) und ein bistabiles Element (13) aufweist, wobei das bistabile Element (13) in Abhängigkeit eines Temperaturwerts seine Zustände wechselt und somit den Transistor (11) schaltet.

8. Computerprogramm mit Programmcodemitteln, um alle Schritte eines Verfahrens nach einem der Ansprüche 1 bis 4 durchzuführen, wenn das Computerprogramm auf einem Computer oder einer entsprechenden Recheneinheit durchgeführt wird.

9. Computerprogrammprodukt mit Programmcodemitteln, die auf einem computerlesbaren Datenträger gespeichert sind, um ein Verfahren nach einem der Ansprüche 1 bis 4 durchzuführen, wenn das Computerprogramm auf einem Computer oder einer entsprechenden Recheneinheit durchgeführt wird.

## Claims

1. Method for locking a control device (5) to be woken up by means of a wake-up signal, which method is carried out taking into account a temperature of the control device (5),
wherein the wake-up signal is blocked by an overtemperature circuit (3) by blocking a signal path (39) via which the wake-up signal is to be transmitted to the control device (5),
**characterized in that** blocking of the wake-up signal triggered by the overtemperature circuit (3) is reset, in the event of the control device (5) being started by a starting apparatus (41) via another signal path, if the temperature is below a critical temperature, with the result that the wake-up signal can reach the control device again.

2. Method according to Claim 1, in which blocking of the wake-up signal is triggered by software and the wake-up signal is blocked by hardware.

3. Method according to one of the preceding claims, in which the wake-up signal which is provided for the control device (5) is blocked by a transistor (11) of the overtemperature circuit (3) by virtue of the transistor (11) diverting the wake-up signal.

4. Method according to Claim 3, in which the transistor (11) provided for diverting the wake-up signal is switched by means of a bistable element (13) of the overtemperature circuit (3).

5. Overtemperature circuit for a control device (5),
**characterized in that** the overtemperature circuit is designed to block a wake-up signal, which is to be used to wake up the control device (5), on a signal path (39) and to therefore lock the control device (5),
**characterized in that** blocking of the wake-up signal triggered by the overtemperature circuit (3) is reset, in the event of the control device (5) being started by a starting apparatus (41) via another signal path, if the temperature is below a critical temperature, with the result that the wake-up signal can reach the control device again.

6. Overtemperature circuit according to Claim 5, which has a temperature profile corresponding to at least a maximum temperature profile of the control device (5) .

7. Overtemperature circuit according to Claim 5 or 6, which has a transistor (11) and a bistable element (13), wherein bistable element (13) changes its states and therefore switches the transistor (11) on the basis of a temperature value.

8. Computer program having program code means for carrying out all steps of a method according to one of Claims 1 to 4 when the computer program is carried out on a computer or a corresponding computing unit.

9. Computer program product having program code means stored on a computer-readable data storage medium for carrying out a method according to one of Claims 1 to 4 when the computer program is carried out on a computer or a corresponding computing unit.

## Revendications

1. Procédé de verrouillage d'une unité de commande (5) qui est destinée à être réveillée par un signal de réveil et qui est exécuté en prenant compte d'une température de l'unité de commande (5),
le signal de réveil étant bloqué par un circuit de surchauffe (3) en raison du blocage d'un chemin de signal (39) par lequel le signal de réveil doit être transmis à l'unité de commande (5),
**caractérisé en ce qu'**un blocage du signal de réveil, déclenché par le circuit de surchauffe (3), est réinitialisé au démarrage de l'unité de commande (5) amorcé par un dispositif de démarrage (41) sur un autre chemin de signal lorsque la température est inférieure à une température critique de sorte que le signal de réveil peut à nouveau atteindre l'unité de commande.

2. Procédé selon la revendication 1, dans lequel un blocage du signal de réveil est déclenché par un logiciel et le signal de réveil est bloqué du côté matériel.

3. Procédé selon l'une des revendications précédentes, dans lequel le signal de réveil, qui est destiné à l'unité de commande (5), est bloqué par un transistor (11) du circuit de surchauffe (3) en raison de la dérivation du signal de réveil effectuée par le transistor (11).

4. Procédé selon la revendication 3, dans lequel le transistor (11), destiné à dériver le signal de réveil, est commuté par un élément bistable (13) du circuit de surchauffe (3).

5. Circuit de surchauffe destiné à une unité de commande (5), **caractérisé en ce que** le circuit de surchauffe est conçu pour bloquer un signal de réveil, avec lequel l'unité de commande (5) doit être réveillée, sur un chemin de signal (39) et ainsi à verrouiller l'unité de commande (5),
**caractérisé en ce qu'**un blocage du signal de réveil, déclenché par le circuit de surchauffe (3), est réinitialisé au démarrage de l'unité de commande (5) amorcé par un dispositif de démarrage (41) sur un autre chemin de signal lorsque la température est inférieure à une température critique de sorte que le signal de réveil peut à nouveau atteindre l'unité de commande.

6. Circuit de surchauffe selon la revendication 5, lequel présente un profil de température qui correspond à au moins un profil de température maximum de l'unité de commande (5).

7. Circuit de surchauffe selon la revendication 5 ou 6, lequel comprend un transistor (11) et un élément bistable (13), l'élément bistable (13) changeant d'états et donc commutant le transistor (11) en fonction d'une valeur de température.

8. Programme informatique comprenant des moyens de code de programme permettant d'exécuter toutes les étapes d'un procédé selon l'une des revendications 1 à 4 lorsque le programme informatique est exécuté sur un ordinateur ou une unité arithmétique correspondante.

9. Produit de programme informatique comprenant des moyens de code de programme qui sont mémorisés sur un support de données lisible par ordinateur pour mettre en œuvre un procédé selon l'une des revendications 1 à 4 lorsque le programme informatique est exécuté sur un ordinateur ou une unité de calcul correspondante.
